Europäisches Patentamt

European Patent Office

Office européen des brevets

(19)

(11) Publication number: 0 343 755 A2

# (12) EUROPEAN PATENT APPLICATION

(21) Application number: 89201339.2

(22) Date of filing: 25.05.89

(51) Int. Cl.⁴: **B29C 67/18** , **B29C 45/14** , **E06B 9/12**

(30) Priority: 27.05.88 NL·8801357

(43) Date of publication of application:
29.11.89 Bulletin 89/48

(84) Designated Contracting States:
AT BE CH DE ES FR GB GR IT LI LU NL SE

(71) Applicant: INDUSTRIAL MOULDINGS B.V.
Haansbergseweg 30 P.O. Box 91
NL-5120 AB Rijen(NL)

(72) Inventor: van Dongen, Cornelius Petrus
Adrianus
van Beuckelaerstraat 27
NL-4931 XG Geertruidenberg(NL)

(74) Representative: Noz, Franciscus Xaverius, Ir.
et al
Algemeen Octrooibureau P.O. Box 645
NL-5600 AP Eindhoven(NL)

(54) "Method for producing a rolling door or rolling shutter".

(57) Method for producing a rolling door or rolling shutter, whereby a flexible support means is clamped between two mould halves, at least one of which is provided with a number of channel-shaped recesses extending at least substantially parallel to one another, and subsequently a plastic material is injected into the mould at at least one side of the support means. A foil of polypropylene is used as a support means, in such a manner that the molecules of the foil material will be directed transversely to the channel-shaped recesses.

FIG. 1.

EP 0 343 755 A2

## Method for producing a rolling door or rolling shutter.

The invention relates to a method for producing a rolling door or rolling shutter, whereby a flexible support means is clamped between two mould halves, at least one of which is provided with a number of channel-shaped recesses extending at least substantially parallel to one another, and subsequently a plastic material is injected into the mould at at least one side of the support means.

When such a method, as e.g. known from NL-A-8303352, is applied a rolling door or rolling shutter can be obtained by making use of a mould having a relatively simple construction, whereby the "slats" of the rolling door or rolling shutter are formed by the plastic parts formed in the channel-shaped recesses of the mould, whilst the hinges between the "slats" extending at least substantially parallel to one another are formed by the parts of the support means connecting said "slats".

According to NL-A-8303352 the support means is formed by threads or fabric embedded in the final product since, as described in said publication, the plastic material in itself is unsuitable for forming the hinged connections between the "slats" of the rolling door casu quo the rolling shutter. Making use of threads or fabric increases the cost, however.

According to the invention a foil of polypropylene is used as a support means, in such a manner that the molecules of the foil material will be directed transversely to the channel-shaped recesses.

Surprisingly it has become apparent that by using the method according to the invention the hinges, formed by the polypropylene foil, between the "slats" do not show any symptons of cracking or the like, not even after prolonged use.

It is noted that from FR-A-1,343,123 there is known a method for producing a toothed belt, whereby use is made of a steel band having openings. At the location of the openings in the band plastic projections are locally injected in a mould in order to form teeth. In this case the carrier for the teeth formed by the metal band is the main component of the object, however.

The invention will be further explained hereinafter with reference to the accompanying Figures.

Figure 1 is a diagrammatic section of an embodiment of a device for carrying out the method according to the invention.

Figure 2 is a larger-scale section of a part of a rolling door or rolling shutter according to the invention.

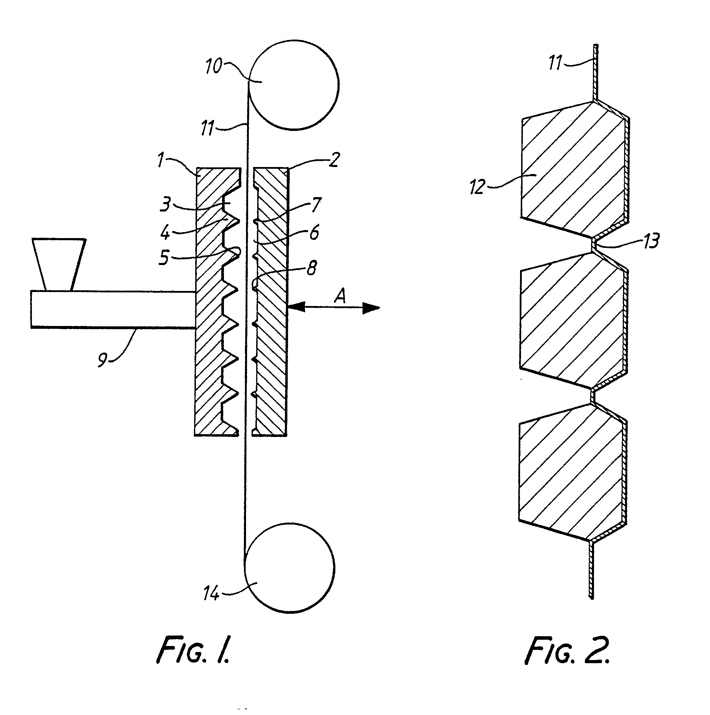

Figure 1 illustrates a mould comprising a pair of mould halves 1 and 2. The mould half 1 may have a fixed arrangement, whilst the mould half 2 can move towards the mould half 1 and away from the mould half 1, as is indicated by the double arrow A.

In the mould half 1 there are provided recesses 3 extending parallel to one another and perpendicularly to the plane of the drawing, seen in the Figure, said recesses 3 being separated from one another by ribs 4, which have a substantially triangular section and whose heads 5 are flattened.

Also the mould half 2 is provided with a number of channel-shaped recesses 6 extending parallel to one another, which recesses 6 are much shallower than the channel-shaped recesses 3, however, as will be apparent from Figure 1. Also the channel-shaped recesses 6 are separated from one another by ribs 7, which have a substantially triangular section and whose heads 8 are also flattened. The construction is thereby such that the flattened heads 5 of the ribs 4 are located opposite the flattened heads 8 of the ribs 6.

To the mould half 1 there is furthermore connected a filling unit 9, known per se, by means of which plastic material can be injected into each of the channel-shaped recesses 3 in a usual manner, via passages (not shown) provided in the mould half 1, which passages extend between the various channel-shaped recesses and the filling unit 9.

Near the mould there is furthermore arranged a reel 10, on which a foil 11 is wound, which foil consists of polypropylene with orientated molecules, whereby the direction of the molecules will be transversely to the longitudinal direction of the channel-shaped recesses 3 and 6, respectively. The foil 11 may be provided between the two mould halves 1 and 2 in the illustrated manner, after which the mould halves can be moved towards each other, so that the foil 11 is clamped between the flat sides 5 and 8 of the ribs 3 and 7. Then plastic material can be injected under pressure into the channel-shaped recesses 3 by means of the filling unit 9. As a result of the pressure exerted on the foil 11 said foil will thereby bed down between the projecting ribs 7, against the boundary walls of the recesses 6.

A certain melting together may also occur thereby between the foil parts located in the recesses 6 and the injected plastic material. After the injected plastic material has cooled down strips or "slats" 12 consisting of plastic material will thus be formed in the recesses 3 and 6, which "slats" are mutually connected by the foil parts 13 (Figure 2) wedged at the location of the flat sides 5 and 8 of the ribs 4 and 7, said foil parts 13 serving as hinges between the slats 12.

After the mould parts 1 and 2 have been moved apart the product thus formed, consisting of foil and the slat-shaped parts 12 connected thereto, can be moved from its position between the mould parts and for example be wound on a further reel 14.

The movement of the product thus formed will thereby be such, that the originally uppermost slat 12, seen in Figure 12, will come to lie just under the mould, after which the mould parts can be clamped together again and the cycle for forming the slats 12, which has been described above, can be repeated again:

Also it is possible to have the movement of the product formed take place in such a manner that e.g. one or two of the slats already formed are accommodated in the mould during a next moulding step.

It will be apparent that thus a rolling door or rolling shutter of any desired length can be produced.

Of course variations and/or additions to the above proposal will be conceivable within the spirit and scope of the invention. Thus it will e.g. be conceivable to inject plastic material into the channel-shaped recesses 3 as well as into the channel-shaped recesses 6, by means of one or more suitable filling units 9. In such a case the plastic foil will be embedded in the plastic material forming the slats 12, between the parts forming the hinges 13.

Furthermore the plastic foil may be given any desired colour, dependent on the requirements made of the eventual product.

Also it will be possible to provide several layers of foil, whether of varying thicknesses or not, on top of each other in the mould. Instead of plastic foil the flexible carrier may e.g. also be formed by a fabric or a so-called non-woven material, which is made of suitable synthetic fibres, e.g. polyester fibres.

## Claims

1. Method for producing a rolling door or rolling shutter, whereby a flexible support means is clamped between two mould halves, at least one of which is provided with a number of channel-shaped recesses extending at least substantially parallel to one another, and subsequently a plastic material is injected into the mould at at least one side of the support means, characterized in that a foil of polypropylene is used as a support means, in such a manner that the molecules of the foil material will be directed transversely to the channel-shaped recesses.

2. Method according to claim 1, characterized in that the foil is moved through the mould in steps, and that after each stepwise movement a plastic material is injected into the recesses, such that elongated slat-shaped parts, consisting of plastic material, are provided on the foil, the number of said slat-shaped parts being a multiple of the number of channel-shaped recesses.

3. Method according to claims 1 or 2, characterized in that a plastic material is injected directly into each of the channel-shaped recesses at at least one side of the foil, by means of at least one filling unit.

4. Method according to any one of the preceding claims, characterized in that on both sides of the foil a plastic material is injected into channel-shaped recesses located opposite to one another in the two mould halves.

5. Mould intended for carrying out the method according to any one of the preceding claims, characterized in that the mould is provided with two mould halves, in each of which there are provided channel-shaped recesses extending at least substantially parallel to one another, said recesses being bounded by ribs, whose facing heads are located opposite to one another.

6. Mould according to claim 5, characterized in that the width of a rib gradually decreases from its head down.

7. Mould according to any one of the claims 5 or 6, characterized in that the depth of the recesses in one mould half is a multiple of the depth of the recesses in the other mould half.

FIG. I.

FIG. 2.